# EUROPEAN PATENT APPLICATION

(11) **EP 4 270 257 A1**
(43) Date of publication of application: **01.11.2023**
(21) Application number: 22203279.9
(22) Date of filing: 24.10.2022
(51) Int. Cl.: G06N 5/01, G06N 5/022, G06N 20/00, G06N 3/09

(54) **SUPERVISED DIMENSIONALITY REDUCTION FOR LEVEL-BASED HIERARCHICAL TRAINING DATA**

(30) Priority: 25.04.2022 US 202217728238
(71) Applicant: Business Objects Software Ltd., Dublin 24 (IE)
(72) Inventor: DOAN HUU, Jacques, 69190 Walldorf (DE)
(74) Representative: Müller-Boré & Partner Patentanwälte PartG mbB

(57) **Abstract**

Systems and methods include identification first members of a child level of a dimension hierarchy which are associated with boundaries between second members of a parent level of the dimension hierarchy, training of a decision tree model based on data associated with the child level, extraction of predicates on the child level from the trained decision tree model, determination of a value based on the identified first members of the child level and on the extracted predicates on the child level, and determination, based on the value, whether to include the parent level and the child level within training data or to include the parent level and not include the child level within the training data.

## Description

### BACKGROUND

Supervised learning is a type of machine learning in which a model is trained based on training data records, each of which includes a target column or feature and other specified dimensions. Supervised learning algorithms iteratively train a model to map the other specified dimensions of the training data records to the target. The trained model can then be used to infer a value of the target based on input data which includes the specified dimensions.

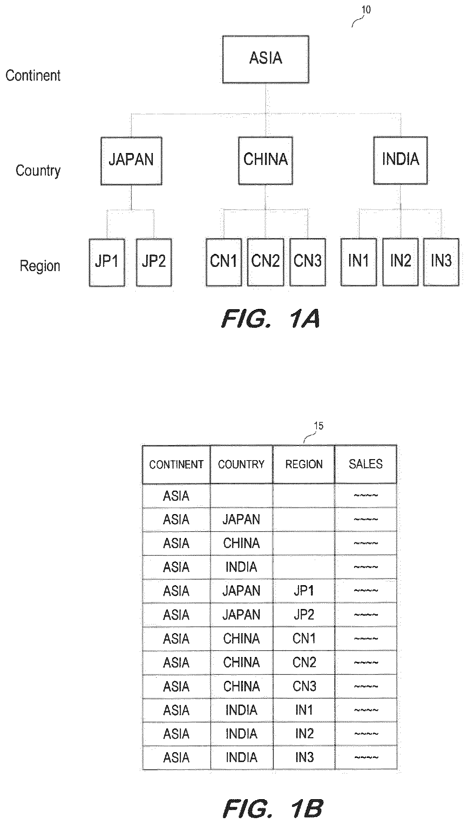

Modern computing systems may store data using level-based hierarchical dimensions, in which two or more levels are related as parent/child. FIG. 1A illustrates instance 10 of a hierarchical dimension Geography which includes the levels Continent, Country and Region. Continent is a parent level of Country, which in turn is a parent level of Region. Accordingly, Country level members Japan, China and India are depicted as child nodes of Continent level member Asia. Similarly, Region level members JP1, JP2 are depicted as child nodes of Country level member Japan, Region level members CN1, CN2, CN3 are depicted as child nodes of Country level member China, and Region level members IN1, IN2, IN3 are depicted as child nodes of Country level member India.

Stored data which is associated with hierarchically-related levels must be flattened prior to using such data to train a model as described above. Flattening includes creation of a tabular structure which associates given level members with target data. FIG. 1B shows flattened table 15 corresponding to instance 10 of FIG. 1A.

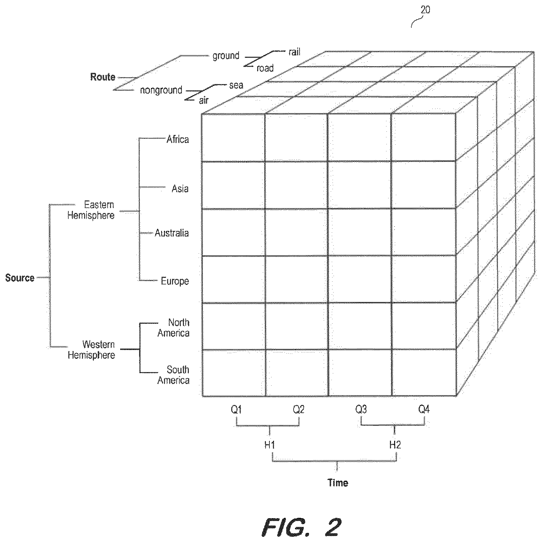

FIG. 2 illustrates multi-dimensional cube 20, in which each sub-cube represents one or more measures associated with a particular combination of Quarter, Continent and Route Type. Quarter, Continent and Route Mode are child levels of Half, Hemisphere and Route Type levels, respectively, and respectively belong to the Time, Source and Route hierarchies. The hierarchies of cube 20 may facilitate selection and/or aggregation of the one or more measures across two or more sub-cubes. Flattening of cube 20 would result in a table including three columns for the child level members and three columns for the associated parent level members.

Flattening removes information relating to hierarchical relationships within data, therefore this information cannot be exploited during model training. Moreover, flattened data may include a significant number of columns, which might negatively affect model training. For example, the additional columns may increase training time without any appreciable gain in performance of the trained model. In another example, the high dimensionality of the flattened data may degrade the accuracy of the trained model. In the case of a decision tree model, the interpretability thereof may suffer if random level selection and equivalences between parent and child levels result in splits within a single trained model which reference many different levels.

Conventional systems to reduce dimensionality of training data (e.g., Principal Component Analysis) do not consider a training target nor hierarchical relationships between dimensions. Systems are desired to efficiently reduce the dimensionality of hierarchical training data.

### BRIEF DESCRIPTION OF THE DRAWINGS

FIG. 1A illustrates an instance of a hierarchical dimension.
FIG. 1B illustrates a flattened table of hierarchical data.
FIG. 2 illustrates a cube representing multi-dimensional data.
FIG. 3 is a block diagram of an architecture to determine reduced-dimensionality hierarchical training data for training a model according to some embodiments.
FIG. 4 comprises a flow diagram of a process to determine reduced-dimensionality hierarchical training data for training a model according to some embodiments.
FIG. 5 illustrates a tree of parent level members and associated sorted child level members according to some embodiments.
FIG. 6 is a tabular representation of topologically sorted and encoded data records for determining training dimensions according to some embodiments.
FIG. 7 is a block diagram illustrating iterative training of a model to generate a decision tree including predicates on level members according to some embodiments.
FIG. 8 illustrates a decision tree including predicates on level members according to some embodiments.
FIG. 9 comprises a flow diagram of a process to determine a value based on predicates on level members of a trained decision tree and to select training levels based on the value according to some embodiments.
FIG. 10 is a tabular representation of flattened and topologically sorted training data records according to some embodiments.
FIG. 11 is a tabular representation of topologically sorted and encoded data records for determining training dimensions according to some embodiments.
FIG. 12 is a tabular representation of reduced-dimensionality training data according to some embodiments.
FIG. 13 illustrates an interface presenting information associated with a trained model according to some embodiments.
FIG. 14 illustrates a system to provide model training to applications according to some embodiments.
FIG. 15 is a block diagram of a hardware system for providing model training according to some embodiments.

### DETAILED DESCRIPTION

The following description is provided to enable any person in the art to make and use the described embodiments. Various modifications, however, will be readily-apparent to those in the art.

Some embodiments relate to reducing the dimensionality of hierarchical training data which is used to train a decision tree model. According to some embodiments, boundary equivalences between members of a parent level and members of a child level are identified. Data associated with the child level is used to train a decision tree model, and values are determined based on the boundary equivalences and on splits extracted from the trained decision tree model. The values may indicate whether a parent level should be substituted for or used in addition to a child level within the hierarchical training data.

Embodiments may be employed to reduce dimensionality of training data in an iterative, hierarchically-aware, and supervised manner (i.e., based on a training target). Embodiments may therefore provide faster training, improved model interpretability and higher predictive accuracy.

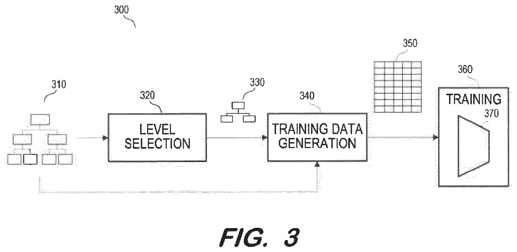

FIG. 3 is a block diagram of architecture 300 to determine reduced-dimensionality hierarchical training data for training a model according to some embodiments. The illustrated components may be implemented using any suitable combination of computing hardware and/or software that is or becomes known. In some embodiments, two or more components are implemented by a single computing device. Two or more components of FIG. 3 may be co-located. One or more components may be implemented as a cloud service (e.g., Software-as-a-Service, Platform-as-a-Service). A cloud-based implementation of any components of FIG. 3 may apportion computing resources elastically according to demand, need, price, and/or any other metric.

Data 310 comprises data associated with hierarchically-related dimensions. Not all dimensions of data 310 necessarily belong to a dimension hierarchy. Data 310 may comprise one or more measures aggregated over multiple hierarchically-organized dimensions, such as an Online Analytical Processing (OLAP) cube.

For each hierarchy represented within data 310, level selection component 320 selects one or more levels which should be included within training data. Unselected levels of a hierarchy are not to be included in the training data. According to some embodiments, the levels which are not selected by level selection component 320, if they were to be included in the training data, may result in slower training, a less accurate model, and/or a less interpretable model than if those levels were selected for inclusion in the training data.

As will be described in detail below, level selection component 320 may operate to identify boundary equivalences between members of a parent level and members of a child level. A boundary equivalence is identified where a predicate on a parent level member is logically equivalent to a predicate on a child level member in terms of the data subspace selected thereby. The child level member can therefore be seen as representing a same boundary within the target data as represented by a parent level member.

For example, given the target Sales and a hierarchy Time consisting of grandparent level Year, parent level Quarter and child level Month, the statement Month < 2004.Q2.Apr is equivalent to Quarter < 2004.Q2. According to some embodiments, level selection component 320 identifies boundary equivalences by topologically sorting members of a child level with respect to members of its parent level and identifying edge members of the sorted child level members.

Level selection component 320 trains a decision tree model based on data associating the child level with a desired target. The trained decision tree model includes splits, each of which is defined by a predicate on the level. These splits are extracted and evaluated with respect to the identified edge members in order to determine whether the parent level should be substituted for or used in addition to the child level within the training data. Level selection component 320 repeats the above process until it is determined that no higher-level dimensions should be included in the training data.

Level selection component 320 therefore outputs, for each hierarchy represented by data 310, a set of levels to be included in the training data. Training data generation component 340 receives the one or more sets of levels and generates table 350 based thereon. Table 350 may include one column for each level of data 310 except for those levels which were not selected by level selection component 320, and including a column storing values of a training target. Table 350 also includes any non-hierarchical dimension attributes of data 310. Table 350 includes fewer levels than represented within data 310.

Table 350 is input to training component 360 to train model 370 to infer a value of the target column based on respective values of the other columns of table 350. Model 370 may comprise any type of decision tree network that is or becomes known. Model 370 may be designed to perform an inference task including but not limited to binary classification (i.e., inference of a category from a set of two known categories), multiclass classification (i.e., inference of a category from a set of more than two known categories) and regression (i.e., inference of a number).

Model 370 may comprise a network of neurons which receive input, change internal state according to that input, and produce output depending on the input and internal state. The output of certain neurons is connected to the input of other neurons to form a directed and weighted graph. The weights as well as the functions that compute the internal states are iteratively modified during training using supervised learning algorithms as is known.

Training component 360 may comprise any suitable algorithms and hardware for training model 370 based on table 350. Generally, training of model 370 comprises inputting dimension values of each record of table into model 370, retrieving resulting values output by model 370, comparing the output value corresponding to each record to the actual value of the target specified by the record, modifying model 370 based on the comparison, and continuing in this manner until the difference between the output values and the actual values of the target (i.e., the network loss) is satisfactory.

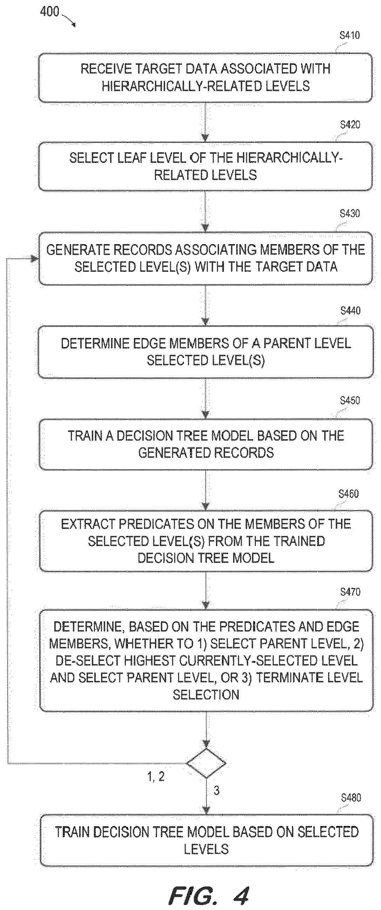

FIG. 4 comprises a flow diagram of process 400 to determine reduced-dimensionality hierarchical training data for training a model based on according to some embodiments. Process 400 and the other processes described herein may be performed using any suitable combination of hardware and software. Software program code embodying these processes may be stored by any non-transitory tangible medium, including a fixed disk, a volatile or non-volatile random access memory, a DVD, a Flash drive, or a magnetic tape, and executed by any one or more processing units, including but not limited to a microprocessor, a microprocessor core, and a microprocessor thread. Embodiments are not limited to the examples described below.

Process 400 may be initiated by a request to generate a model to determine a classification or value based on a set of specified data. Accordingly, the data is initially received at S410. The data associates a target (e.g., Sales) with a plurality of dimensions. At least one of the dimensions includes a hierarchy of levels. The specified data may comprise an OLAP cube as is known in the art.

A leaf level of the hierarchy is selected at S420. Process 400 is described herein under the assumption that the data includes only one hierarchy. With respect to the hierarchy Time described above, the level Month would be the leaf level selected at S420. The present example assumes a hierarchy Geography including grandparent.parent.child levels Hemisphere.Region.Country. Accordingly, level Country is selected at S420. Modification of process 400 to account for multiple hierarchies will be described below.

Next, at S430, records are generated which associate members of the currently-selected level(s) with the target data. At this point of execution in the present example, only one level (i.e., Country) has been selected and records are generated at S430 to associate Country with the target Sales. Generation of the records at S430 may comprise topologically sorting the members of the selected level with respect to members of the parent level and encoding the sorted members.

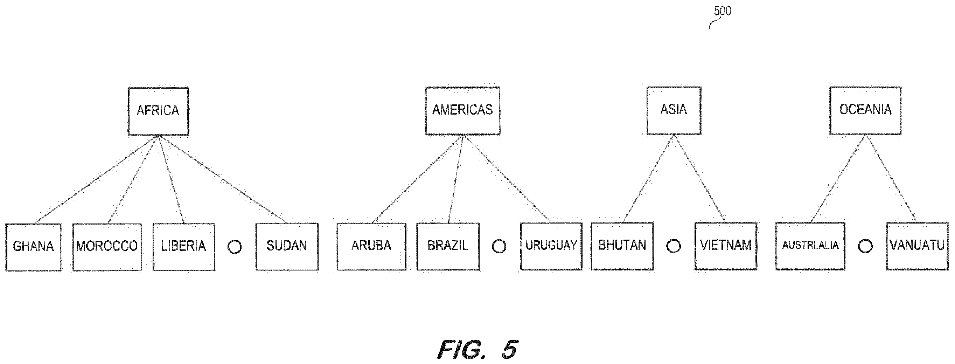

FIG. 5 illustrates tree 500 of sorted parent level members and associated child level members according to some embodiments. The members of parent level Region are first sorted alphabetically from left to right. For each parent level member, its child members are identified and are sorted alphabetically amongst themselves, as shown in tree 500.

The sorted child level members are encoded by assigning continuous ordinals thereto. For example, member Ghana is assigned 0, member Morocco is assigned ordinal 1, and member Liberia is assigned ordinal2. It will be assumed that 43 additional members are located in alphabetical order between member Liberia and member Sudan and are assigned ordinals as above, thus member Sudan is assigned ordinal 45.

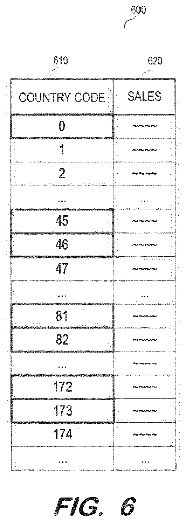

Encoding continues to assign ordinal 46 to member Aruba, ordinal 57 to member Brazil and ordinal 81 to member Uruguay due to intervening members between member Brazil and member Uruguay. FIG. 6 illustrates corresponding records 600 generated at S430. Each record includes a Country Code 610 corresponding to a member of the selected level (i.e., Country) and a target value 620 which corresponds to the member within the data received at S410.

Edge members of the highest currently-selected level (i.e., Country) are determined at S440. Edge members comprise members which define a boundary that is equivalent to a boundary defined by its parent member. In the present example, Sudan is an edge member because Country Code < (Sudan Code+1) is equivalent to Region < Americas, and Sudan is the rightmost child member of parent member Africa. Similarly, Aruba is an edge member because Country Code > (Aruba Code-1) is equivalent to Region > Africa, and Aruba is the leftmost child member of parent member Americas. Records 600 highlights the edge members determined at S440, corresponding to Country Codes 0 (i.e., Ghana), 45 (i.e., Sudan), 46 (i.e., Aruba), 81 (i.e., Uruguay), 82 (i.e., Bhutan), 172 (i.e., Vietnam) and 173 (i.e., Australia).

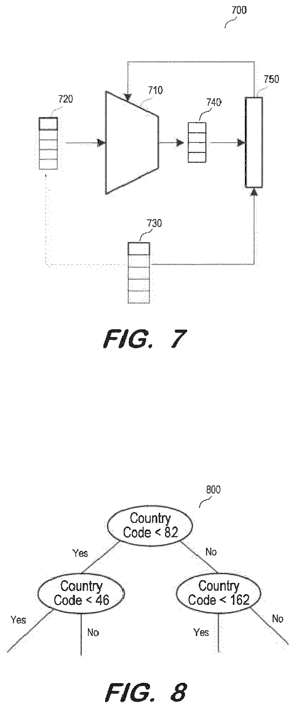

A decision tree model is trained at S450 based on the records generated at S430. FIG. 7 is a block diagram of iterative training of a decision model according to some embodiments of S450. Model 710 may comprise any suitable decision tree model. Model 710 is trained using input records 720 consisting of Country Code column 610 of records 600 and ground truth data 730 consisting of Sales column 620.

Training at S450 may comprise execution of training iterations. One iteration according to some embodiments may include inputting records 720 to model 710, operating model 710 to output resulting inferred values 740 for each record of data 720, operating loss layer 750 to evaluate a loss function based on output inferred values 740 and known ground truth data 730, and modifying model 710 based on the evaluation.

Iterations continue until model performance exceeds a threshold, until model performance is not significantly improved with subsequent iterations and/or a threshold number of iterations have been performed. The threshold of satisfactory performance may be lower than that which would be required if the model were to be subsequently used to infer values of the target. In the present instance the model is trained in order to generate decision tree splits and therefore a high level of inference accuracy (and/or precision) is not required. Due to the low number of input dimensions and the relatively low number of training iterations required, model training at S450 may proceed rather quickly.

Splits are extracted from the trained decision tree model at S460. Each split is defined by a predicate on a level which was used to train the decision tree model. FIG. 8 illustrates a portion of trained decision tree 800 including predicates on level members according to some embodiments. Each node of tree 800 specifies a split to evaluate and a path to follow depending on whether or not the value of the Country Code level of an input record satisfies the split. S460 comprises extracting each split specified by the trained decision tree model using any technique for doing so that is or becomes known.

A determination is executed at S470 based on the predicates of the extracted splits and the identified edge members. According to some embodiments, the degree to which the predicates of the extracted splits are associated with edge members is used to determine whether the parent of the highest currently-selected level be substituted for or used in addition to the highest currently-selected level within the training data. The degree may be represented by a value or values calculated in any suitable manner based on the predicates and the edge members.

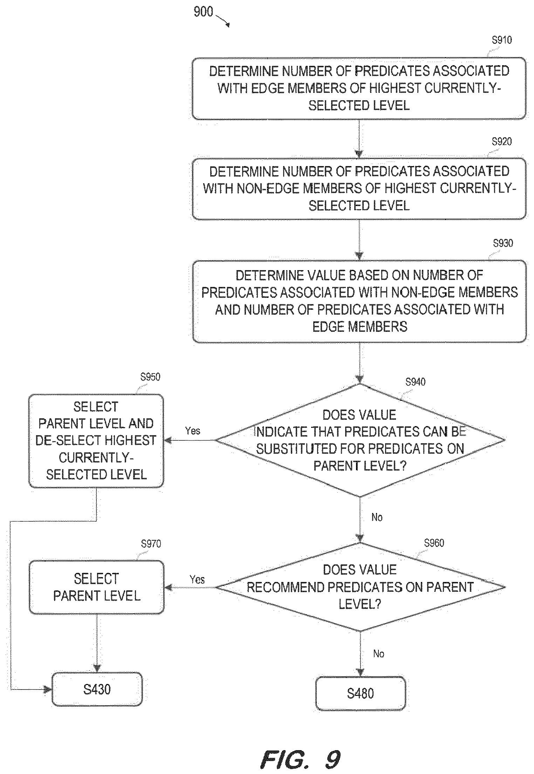

FIG. 9 is a flow diagram of process 900 to perform the determination at S470 according to some embodiments. S470 is not limited to process 900.

Initially, at S910, a number of split predicates associated with edge members of the highest currently-selected level is determined. In the present example, Country is the highest currently-selected level and S910 includes counting the number of predicates including a country code which is also associated with one of the edge members determined at S440. Similarly, at S920, a number of split predicates associated with non-edge members of the highest currently-selected level is determined. A non-edge member is any member of the level which was not determined to be an edge member at S440.

A value is determined at S930 based on the numbers determined at S910 and S920. In some embodiments, each number is factored by the number of level members in its corresponding category (i.e., edge or non-edge). For example, S910 may identify 100 predicates associated with one of 5 total edge members determined at S440, while S920 may identify 700 predicates associated with one of 173 total non-edge members of the highest currently-selected level. An average number of predicates per category may be determined as 100/5 = 20 and 700/173 = 4.05. These average may be normalized to determine an Upper Level Substitution Ratio (ULSR) of 20/(20+4.05) = 83.16%.

At S940, it is determined whether the value indicates that the extracted predicates can be substituted with predicates on the parent level (i.e., Region). In some embodiments, S940 comprises determination of whether the ULSR is greater than a threshold value (e.g., 99%). Flow proceeds to S950 if the ULSR is greater than the threshold value. At S950, the parent level (i.e., Region) is selected and the highest currently-selected level (Country) is de-selected. Accordingly, the de-selected level will not be used for subsequent model training as described below.

Flow then returns to S430 to generate records associated members of the now-selected levels with the target data. In a case that flow returns to S430 from S950 (i.e., option 2 is determined at S470), the now-selected levels include only the prior parent level (i.e., Region). S430 through S470 are therefore repeated with respect to the selected level as described above with respect to the leaf level.

Returning to process 900, flow continues to S960 if the determination at S940 is negative (e.g., the determined value is < 99%). At S960, it is determined whether the value determined at S930 indicates that the decision tree would benefit from inclusion of predicates on the parent level (i.e., Region). In some embodiments, S960 comprises determination of whether the ULSR is greater than a second threshold value (e.g., 10%). If the ULSR is greater than the second threshold value, the parent level (i.e., Region) is selected at S970 and flow returns to S430.

In a case that flow returns to S430 from S970 (i.e., option 1 is determined at S470), the now-selected levels include the previously-selected level (i.e., Country) and its parent level (i.e., Region). S430 therefore includes generation of records which associated both Country and Region with the target data. In this regard, the members of level Region are sorted topographically and assigned ordinals as described above. The records generated at S430 may therefore include the previously-determined ordinals associated with the level Country as well as the ordinals associated with the level Region.

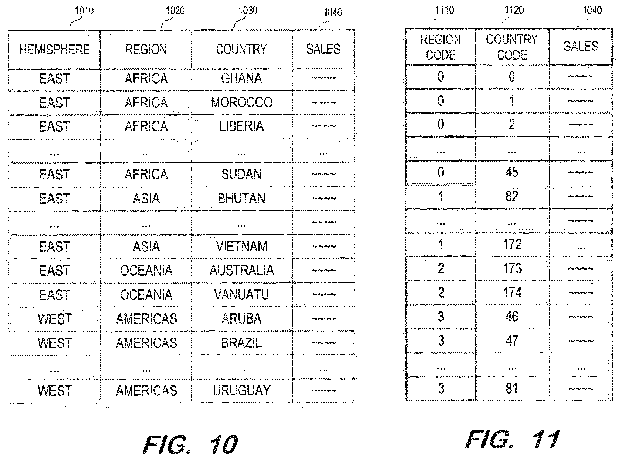

FIG. 10 is a tabular representation of sorting of the members of Region level 1020 based on the members of Hemisphere level 1010. Since the members of Region level 1020 are sorted differently than shown in FIG. 5, their corresponding child level members are also sorted differently. FIG. 11 is an example of records generated during a second iteration of S430 according to the present example. As previously described, the members of the highest currently-selected level are encoded with ordinals (in Region Code column 1110) according to their sort order. FIG. 11 also highlights the edge members (i.e., 0, 1, 3) of the Region level. As shown, Country Code column includes the previously-determined ordinals associated with the Country level.

A decision tree model is trained at S450 based on the two-dimensional records and predicates are extracted therefrom at S460. The predicates may include predicates on members of either level of the records (i.e., Country Code or Region Code). The determination at S470, however, is based only on edge members of the highest currently-selected level (i.e., Region), and not on the edge members of any other currently-selected levels (i.e., Country).

Flow proceeds from S960 to S480 if the determination at S960 is negative (e.g., USLR < 10%). At S480, a decision tree model is trained based on the currently-selected levels. If S480 is reached after one iteration of S430 through S470, the selected levels consist only of the leaf level. If S480 is reached after two iterations of S430 through S470 and option 1 was determined during the first iteration of S470, the selected levels consist of the leaf level and its parent level. In yet another example, S480 is reached after three iterations of S430 through S470, in which option 2 was determined during the first iteration of S470 (e.g., USLR > 99%) and option 1 was determined during the second iteration of S470 (e.g., 10% <USLR < 99%). Accordingly, the selected level in this latter example consist of the second-lowest level in the hierarchy and its parent level (e.g., Region and Hemisphere).

Training of a decision tree model at S480 may include flattening the data received at S410 by generating a table including one column for each selected level of each hierarchy, one column for each non-hierarchical dimension, and one column for the training target. In this regard, S420 through S470 may be performed independently for each separate hierarchy of the received data in order to select levels of each hierarchy.

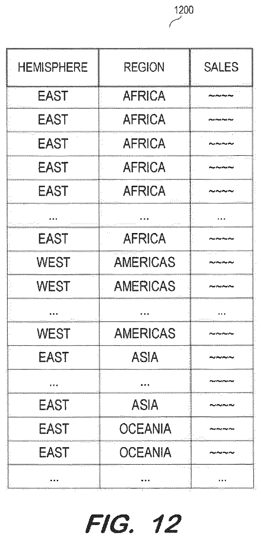

FIG. 12 illustrates training data records 1200 including selected levels according to some embodiments. As shown, the selected levels do not include the Country level. Training data records 1200 may be used to train a decision tree model to infer a value of the Sales measure based on an input Hemisphere and Region. Training of the decision tree model at S480 may be intended to generate a trained model which is more accurate, precise and interpretable than the models trained at iterations of S450. For example, the number of training iterations at S480 may be greater and the loss threshold may be smaller than those used at S450. S480 may also or alternatively include testing to ensure that model performance exceeds specified metrics.

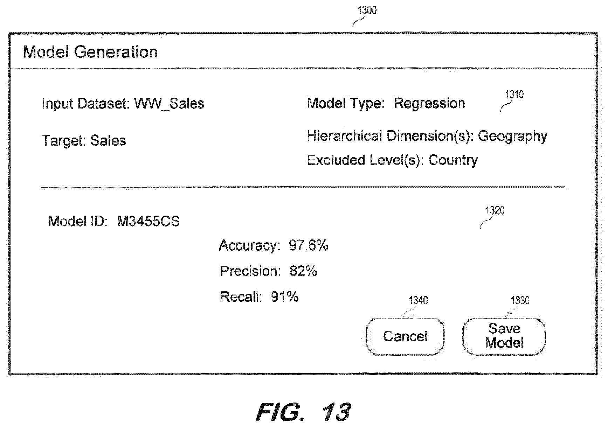

FIG. 13 illustrates interface 1300 presenting information associated with a model trained according to some embodiments. User interface 1300 may be presented by a user device executing a client application (e.g., a Web application) which provides training of machine learning models.

User interface 1300 includes area 1310 presenting various configuration parameters based on which a trained model was generated. The configuration parameters include an input dataset (e.g., an OLAP cube), a type of model (i.e., Regression), and a training target. Area 1310 also indicates any hierarchies of the input dataset and levels of the hierarchies which were excluded from training data as described herein.

Area 1320 provides information regarding the model which was been trained based on the configuration parameters of area 1310. In the illustrated example, area 1320 specifies an identifier of the trained model and accuracy, precision and recall values. Embodiments are not limited to the information of area 1320. A user may review the information provided in area 1 320 to determine whether to save the trained model for use in generating future inferences (e.g., via Save Model control 1330) or to discard the trained model (e.g., via Cancel control 1340).

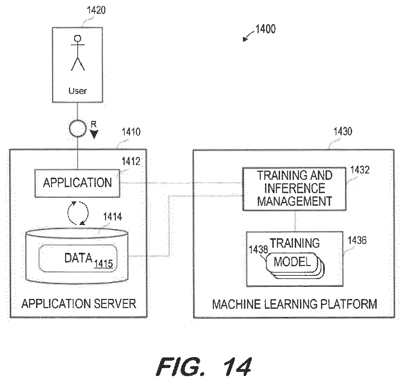

FIG. 14 illustrates system 1400 to provide model training to applications according to some embodiments. Application server 1410 may comprise an on-premise or cloud-based server providing an execution platform and services to applications such as application 1412. Application 1412 may comprise program code executable by a processing unit to provide functions to users such as user 1420 based on logic and on data 1415 stored in data store 1414. Data 1415 may be column-based, row-based, object data or any other type of data that is or becomes known. Data store 1414 may comprise any suitable storage system such as a database system, which may be partially or fully remote from application server 1410, and may be distributed as is known in the art.

According to some embodiments, user 1420 may interact with application 1412 (e.g., via a Web browser executing a client application associated with application 1412) to request a trained model based on data of data 1415. The data may comprise data aggregated across dimensions of an OLAP cube. In response to the request, application 1412 may call training and inference management component 1432 of machine learning platform 1430 to request training of a corresponding model according to some embodiments.

Based on the request, training and inference management component 1432 may receive the specified data from data 1415 and instruct training component 1436 to train a model 1438 based on dimension-reduced training data as described herein. Application 1412 may then use the trained model to generate inferences based on input data selected by user 1420.

In some embodiments, application 1412 and training and inference management component 1432 may comprise a single system, and/or application server 1410 and machine learning platform 1430 may comprise a single system. In some embodiments, machine learning platform 1430 supports model training and inference for applications other than application 1412 and/or application servers other than application server 1410.

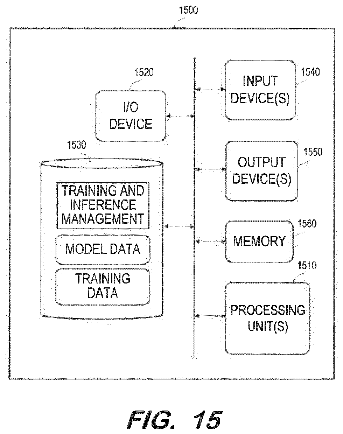

FIG. 15 is a block diagram of a hardware system providing model training according to some embodiments. Hardware system 1500 may comprise a general-purpose computing apparatus and may execute program code to perform any of the functions described herein. Hardware system 1500 may be implemented by a distributed cloud-based server and may comprise an implementation of machine learning platform 1430 in some embodiments. Hardware system 1500 may include other unshown elements according to some embodiments.

Hardware system 1500 includes processing unit(s) 1510 operatively coupled to I/O device 1520, data storage device 1530, one or more input devices 1540, one or more output devices 1550 and memory 1560. I/O device 1520 may facilitate communication with external devices, such as an external network, the cloud, or a data storage device. Input device(s) 1540 may comprise, for example, a keyboard, a keypad, a mouse or other pointing device, a microphone, knob or a switch, an infra-red (IR) port, a docking station, and/or a touch screen. Input device(s) 1540 may be used, for example, to enter information into hardware system 1500. Output device(s) 1550 may comprise, for example, a display (e.g., a display screen) a speaker, and/or a printer.

Data storage device 1530 may comprise any appropriate persistent storage device, including combinations of magnetic storage devices (e.g., magnetic tape, hard disk drives and flash memory), optical storage devices, Read Only Memory (ROM) devices, and RAM devices, while memory 1560 may comprise a RAM device.

Data storage device 1530 stores program code executed by processing unit(s) 1510 to cause system 1500 to implement any of the components and execute any one or more of the processes described herein. Embodiments are not limited to execution of these processes by a single computing device. Data storage device 1530 may also store data and other program code for providing additional functionality and/or which are necessary for operation of hardware system 1500, such as device drivers, operating system files, etc.

The foregoing diagrams represent logical architectures for describing processes according to some embodiments, and actual implementations may include more or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of network(s) and/or a dedicated connection. Each component or device may comprise any number of hardware and/or software elements suitable to provide the functions described herein as well as any other functions. For example, any computing device used in an implementation some embodiments may include a processor to execute program code such that the computing device operates as described herein.

Embodiments described herein are solely for the purpose of illustration. Those in the art will recognize other embodiments may be practiced with modifications and alterations to that described above.

## Claims

1. A system comprising:
a memory storing processor-executable program code; and
at least one processing unit to execute the processor-executable program code to cause the system to:
receive target data associated with a dimension including a hierarchy of levels;
determine a first plurality of members of a first one of the levels, wherein each of the first plurality of members represents a same boundary within the target data as represented by a member of a parent level of the first one of the levels;
generate records associating members of the first one of the levels with the target data;
train a first decision tree model based on the generated records;
determine, from the trained decision tree model, a plurality of predicates associated with members of the first one of the levels;
based on the first plurality of members and the plurality of predicates, select either the parent level and the first one of the levels, or the parent level and not the first one of the levels; and
train a second decision tree model based on the selected one or more levels.

2. A system according to Claim 1, wherein selection of either the parent level and the first one of the levels, or the parent level and not the first one of the levels comprises:
determination of a first number of the plurality of predicates which are associated with one of the first plurality of members; and
selection, based on the first number, of either the parent level and the first one of the levels, or the parent level and not the first one of the levels.

3. A system according to Claim 2, wherein selection of the parent level and the first one of the levels, or the parent level and not the first one of the levels comprises:
determination of a second number of the first plurality of members,
wherein selection of either the parent level and the first one of the levels, or the parent level and not the first one of the levels, is based on the first number and the second number.

4. A system according to Claim 3, wherein selection of either the parent level and the first one of the levels, or the parent level and not the first one of the levels comprises:
determination of a third number of the plurality of predicates which are not associated with one of the first plurality of members; and
determination of a fourth number of members of the first one of the levels which are not one of the first plurality of members,
wherein selection of either the parent level and the first one of the levels, or the parent level and not the first one of the levels, is based on the first number, the second number, the third number and the fourth number.

5. A system according to any one of Claims 1 to 4, the at least one processing unit to execute the processor-executable program code to cause the system to:
determine a second plurality of members of a second one of the levels, wherein each of the second plurality of members represents a same boundary within the target data as represented by a member of a parent level of the second one of the levels;
generate second records associating members of the second one of the levels with the target data;
train a third decision tree model based on the generated second records;
determine, from the trained third decision tree model, a second plurality of predicates associated with members of the second one of the levels; and
based on the second plurality of dimension members and the second plurality of predicates, select either the parent level of the second one of the levels and the second one of the levels, or the parent level of the second one of the levels and not the second one of the levels,
wherein the second decision tree model is trained based on the selected parent level of the second one of the levels and the second one of the levels, or the parent level of the second one of the levels and not the second one of the levels;
wherein, optionally, selection of either the parent level of the first one of the levels and the first one of the levels, or the parent level of the first one of the levels and not the first one of the levels comprises:
determination of a first number of the plurality of predicates which are associated with one of the first plurality of members; and
selection, based on the first number, of either the parent level of the first one of the levels and the first one of the levels, or the parent level of the first one of the levels and not the first one of the levels, and
wherein selection of either the parent level of the second one of the levels and the second one of the levels, or the parent level of the second one of the levels and not the second one of the levels comprises:
determination of a second number of the second plurality of predicates which are associated with one of the second plurality of members; and
selection, based on the second number, of either the parent level of the second one of the levels and the second one of the levels, or the parent level of the second one of the levels and not the second one of the levels.

6. A method comprising:
identifying first members of a child level of a dimension hierarchy which are associated with boundaries between second members of a parent level of the dimension hierarchy;
training a decision tree model based on data associated with the child level;
extracting predicates on the child level from the trained decision tree model;
determining a value based on the identified first members of the child level and on the extracted predicates on the child level; and
determining, based on the value, whether to include the parent level and the child level within training data or to include the parent level and not include the child level within the training data.

7. A method according to Claim 6, wherein determining the value comprises:
determining a first number of the predicates which are associated with one of the first members; and
determining the value based on the first number.

8. A method according to Claim 7, wherein determining the value comprises:
determining a second number of the first members; and
determining the value based on the first number and the second number.

9. A method according to Claim 8, wherein determining the value comprises:
determining a third number of the predicates which are not associated with one of the first members;
determining a fourth number of members of the child level which are not one of the first members; and
determining the value based on the first number, the second number, the third number and the fourth number.

10. A method according to any one of Claims 6 to 9, further comprising:
identifying third members of a second child level which are associated with boundaries between fourth members of a second parent level of the second child level;
training a second decision tree model based on data associated with the second child level;
extracting second predicates on the second child level from the trained second decision tree model;
determining a second value based on the identified third members of the second child level and on the extracted second predicates on the second child level; and
determining, based on the second value, whether to include the second parent level and the second child level within the training data or to include the second parent level and not include the second child level within the training data;
wherein, optionally, determining the value comprises:
determining a first number of the predicates which are associated with one of the first members;
determining a second number of the first members;
determining a third number of the second predicates which are associated with one of the third members;
determining a fourth number of the third members; and
determining the value based on the first number, the second number, the third number and the fourth number.

11. A non-transitory medium storing executable program code executable by at least one processing unit of a computing system to cause the computing system to:
receive target data associated with a dimension including a hierarchy of levels;
determine a first plurality of members of a first one of the levels, wherein each of the first plurality of members represents a same boundary within the target data as represented by a parent level of the first one of the levels;
generate records associating dimension members of the one of first one of the levels with the target data;
train a first decision tree model based on the generated records;
determine, from the trained decision tree model, a plurality of predicates associated with members of the first one of the levels;
based on the first plurality of members and the plurality of predicates, select either the parent level and the first one of the levels, or the parent level and not the first one of the levels; and
train a second decision tree model based on the selected one or more levels.

12. A medium according to Claim 11, wherein selection of either the parent level and the first one of the levels, or the parent level and not the first one of the levels comprises:
determination of a first number of the plurality of predicates which are associated with one of the first plurality of members; and
selection, based on the first number, of either the parent level and the first one of the levels, or the parent level and not the first one of the levels.

13. A medium according to Claim 12, wherein selection of either the parent level and the first one of the levels, or the parent level and not the first one of the levels comprises:
determination of a second number of the first plurality of members,
wherein selection of either the parent level and the first one of the levels, or the parent level and not the first one of the levels, is based on the first number and the second number.

14. A medium according to Claim 13, wherein selection of either the parent level and the first one of the levels, or the parent level and not the first one of the levels comprises:
determination of a third number of the plurality of predicates which are not associated with one of the first plurality of members; and
determination of a fourth number of members of the first one of the levels which are not one of the first plurality of members,
wherein selection of either the parent level and the first one of the levels, or the parent level and not the first one of the levels, is based on the first number, the second number, the third number and the fourth number.

15. A medium according to any one of Claims 11 to 14, the at least one processing unit to execute the processor-executable program code to cause the system to:
determine a second plurality of members of a second one of the levels, wherein each of the second plurality of members represents a same boundary within the target data as represented by a member of a parent level of the second one of the levels;
generate second records associating members of the second one of the levels with the target data;
train a third decision tree model based on the generated second records;
determine, from the trained third decision tree model, a second plurality of predicates associated with members of the second one of the levels; and
based on the second plurality of members and the second plurality of predicates, select either the parent level and the second one of the levels, or the parent level and not the second one of the levels,
wherein the second decision tree model is trained based on the selected parent level and the second one of the levels, or the parent level and not the second one of the levels;
wherein, optionally, selection of either the parent level and the first one of the levels, or the parent level and not the first one of the levels, comprises:
determination of a first number of the plurality of predicates which are associated with one of the first plurality of members; and
selection, based on the first number, of either the parent level and the first one of the levels, or the parent level and not the first one of the levels, and
wherein selection of either the parent level and the second one of the levels, or the parent level and not the second one of the levels comprises:
determination of a second number of the second plurality of predicates which are associated with one of the second plurality of members; and
selection, based on the second number, of either the parent level and the second one of the levels, or the parent level and not the second one of the levels.
